# EUROPEAN PATENT APPLICATION

(11) **EP 4 333 254 A1**
(43) Date of publication of application: **06.03.2024**
(21) Application number: 22794718.1
(22) Date of filing: 20.04.2022
(51) Int. Cl.: H02J 7/34, H01M 10/44

(54) **INTELLIGENT ENERGY STORAGE SYSTEM**

(30) Priority: 28.04.2021 CN 202110465244
(71) Applicant: Team Young Technology Co., Ltd., 32070 Taoyuan City (TW)
(72) Inventor: LIN, Tz-Min, Taoyuan City, Taiwan 32070 (TW); WANG, Dy-Cheng, Taoyuan City, Taiwan 32070 (TW)
(74) Representative: Becker, Eberhard
(86) International application number: PCT/CN2022/087975
(87) International publication number: WO 2022/228247

(57) **Abstract**

The present invention provides an intelligent energy storage system, which is electrically connected to an external power supply and a load, and comprises: a first energy storage device, a second energy storage device, at least one converter, and a controller. The first energy storage device has a function of storing electrical energy; the second energy storage device is electrically connected to the external power supply and the load; the converter is electrically connected between the first energy storage device and the second energy storage device; the controller is used for detecting at least one electrical characteristic of the first energy storage device or the second energy storage device to adjust an output voltage and an output current of the converter; in an electricity storage mode, the external power supply is used as a power source to charge the first energy storage device via the second energy storage device; and in a dump mode, the first energy storage device is used as the power source to charge the second energy storage device.

## Description

### BACKGROUND

### Technical Field

The disclosure relates to an energy storage system, more particularly, to an intelligent energy storage system.

### Description of Related Art

Rechargeable batteries have been widely used in various daily necessities. For example, in vehicles powered by an internal combustion engine (hereinafter referred to as "engine"), a battery is used to start the engine. Currently, most motorcycles and cars on the market use lead-acid batteries for starting and storing power. However, lead-acid batteries are environmentally unfriendly due to their lead-based process, and their average life time is only 2 to 3 years. A traditional lead-acid battery consists of positive plates, negative plates, separators, battery slots, electrolyte, and terminal connectors. The principle of a battery is to convert chemical electrical energy into direct current electrical energy and provide repeated storage and usage through charging and discharging. Devices that utilize lead-acid batteries to start engines often experience deterioration after repeated operations due to the need for instant high current draw. This leads to an increase in internal resistance, resulting in accelerated deterioration and eventual failure of the battery because of starting the engine under unchanged high current draw. The life time of a lead-acid battery is also influenced by different conditions of current draw. Furthermore, in addition to a shortened life time due to increasing internal resistance, lead-acid batteries have drawbacks such as the potential of generating hazardous and flammable hydrogen gas during overcharging and irreversible damage to electrolytes and lead plates due to the crystallization of a large amount of lead sulfate during overdischarging, leading to deterioration and a significant decrease or complete loss of storage capacity. In addition, lead-acid batteries are heavy, bulky, and pose high risks of environmental pollution when discarded, making them less than ideal.

Thus, in recent years, the industry has developed the use of super capacitor banks and lithium (iron) batteries to extend the life time of lead-acid batteries or replace the lead-acid batteries. Although there are applications combining super capacitor banks and lead-acid batteries, they still cannot fully harness the combined energy storage capacity, large current output, and the advantage of voltage stabilization. The use of lithium (iron) battery also presents challenges related to decreased life time due to large current discharging and uncontrolled charging currents. Thus, there is an urgent need to develop technologies that allow for the replacement of lead-acid batteries with super capacitor banks and lithium (iron) batteries while protecting the lithium (iron) batteries from large current charging or discharging. This will help increase the life time of lithium (iron) batteries and overcome the current limitations.

### SUMMARY

In view of the above drawbacks, and in order to achieve the above goals, an intelligent energy storage system disclosed by the disclosure is electrically connected to an external power source and a load, and the intelligent energy storage system includes a first energy storage device, for storing electrical energy; and a second energy storage device, electrically connected to the external power source and the load. In an energy storage mode, the external power source is used as a power source to charge the first energy storage device through the second energy storage device. In an energy transfer mode, the first energy storage device is used as a power source to charge the second energy storage device. The intelligent energy storage system also includes at least one converter, electrically connected between the first energy storage device and the second energy storage device for regulating an output voltage and an output current, allowing the first energy storage device to unidirectionally charge the second energy storage device, or allowing the external power source to unidirectionally charge the first energy storage device through the second energy storage device; and a controller, configured to detect at least one electrical property of the first energy storage device or the second energy storage device to regulate the output voltage and the output current of the converter to avoid a large current charge or discharge of the first energy storage device to protect the first energy storage device.

In addition, to achieve the above goals, in the intelligent energy storage system of the disclosure, the first energy storage device is a lithium battery structure, including any one or a combination of a lithium (iron) battery, a ternary lithium battery, etc. The second energy storage device is a capacitor structure, including any one or a combination of a super capacitor, a super capacitor bank, a capacitor bank, etc. The external power source is a power source, including any one or a combination of a generator, an external battery, etc. The external power source is configured to provide the needed power for the load. In addition, the second energy storage device is electrically connected to the external power source. In response to the external power source in an external power supply state, that is, in the energy storage mode, the external power source is connected to the converter through the second energy storage device and then to the first energy storage device. The controller controls the output voltage and the output current through controlling the converter to charge the first energy storage device, that is, the electrical energy output by the external power source is unidirectionally charged back to the first energy storage device through the converter.

In addition, to achieve the above goals, in the intelligent energy storage system of the disclosure, the controller detects at least one electrical property of the first energy storage device. A first voltage value and a first current value of the first energy storage device are measured respectively through a voltage measuring device and a current measuring device. The controller detects at least one electrical property of the second energy storage device, and a second voltage value of the second energy storage device is measured though the voltage measuring device. The first voltage value and the first current value of the first energy storage device and the second voltage value of the second energy storage device are provided to the controller, respectively, and the controller thereby regulates the output voltage and the output current of the converter.

In addition, to achieve the above goals, in the intelligent energy storage system of the disclosure, the converter includes an off state, a charge control state, and a discharge control state. The off state means that the converter does not perform charging or discharging. The charge control state is for the external power source to unidirectionally charge the first energy storage device through the second energy storage device and the converter. The discharge control state is for the first energy storage device to unidirectionally charge the second energy storage device through the converter.

In addition, to achieve the above goals, in the intelligent energy storage system of the disclosure, the controller controls the converter to switch between the off state, the charge control state, and the discharge control state according to the detected at least one electrical property of the first energy storage device or the second energy storage device.

In addition, to achieve the above goals, in the intelligent energy storage system of the disclosure, the energy storage mode is entered after detecting by the controller that the second voltage value of the second energy storage device conforms to an external power supply state. The controller controls the converter to switch to the charge control state, and the external power source is used as a power source to unidirectionally charge the first energy storage device through the second energy storage device and the converter until the first energy storage device is fully charged to a high potential. That is, the first current value of the first energy storage device reaches a first lower limit current value.

In addition, to achieve the above goals, in the intelligent energy storage system of the disclosure, after the controller detects that the second voltage value of the second energy storage device conforms to an external power off state, the load uses at least one of the first energy storage device and the second energy storage device as a source of electricity supply. In response to the energy level of the second energy storage device being insufficient to meet the power demand of the load, that is, the second voltage value of the second energy storage device falls below the second lower limit voltage value, the energy transfer mode is entered, the controller controls the converter to switch to the discharge control state, and the first energy storage device is used as a power source to unidirectionally charge the second energy storage device through the converter until the second energy storage device is fully charged to a high potential. That is, in response to the second voltage value of the second energy storage device reaches a second upper limit voltage value, the controller controls the converter to switch to the off state, so that the converter does not charge or discharge.

In addition, to achieve the above goals, in the intelligent energy storage system of the disclosure, in the external power off state, the load uses the second energy storage device as the source of electricity supply. In response to the controller detecting that the second voltage value of the second energy storage device has a sudden and rapid continuous drop, the load should has a large electricity demand that lasts for a long time. The controller controls a switch circuit to turn on the first energy storage device and the second energy storage device, so that the first energy storage device and the second energy storage device together serve as the source of electricity supply and supply the large electricity demand required by the load that lasting for a long time.

In addition, to achieve the above goals, in the intelligent energy storage system of the disclosure, in the energy storage mode, in response to the converter switching to the charge control state, the converter is regulated by the controller to unidirectionally charge the first energy storage device, and a constant current charging mode and a constant voltage charging mode are sequentially executed. A condition for the constant current charging mode to be changed to the constant voltage charging mode is to satisfy a default upper limit charging voltage value.

In addition, to achieve the above goals, in the intelligent energy storage system of the disclosure, in the energy transfer mode, in response to the converter switching to the discharge control state, the converter is regulated by the controller to unidirectionally charge the second energy storage device, and the constant current charging mode and the constant voltage charging mode are sequentially executed. A condition for the constant current charging mode to be changed to the constant voltage charging mode is to satisfy the default upper limit charging voltage value.

The detailed structure, features, assembly, or usage of the intelligent energy storage system disclosed in the disclosure are described in the subsequent detailed description of the implementation. However, those skilled in the art in this field should understand that such detailed descriptions and specific embodiments for implementing the disclosure are provided for illustrative purposes only and should not be construed as limiting the technical scope of the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure, and together with the description serve to explain principles of the disclosure.
FIG. 1 is a schematic view of an intelligent energy storage system with a converter in the first embodiment.
FIG. 2 is a schematic view of an intelligent energy storage system with two converters in the second embodiment.
FIG. 3 is a schematic view of an intelligent energy storage system with a converter and a switch circuit in the third embodiment.

### DESCRIPTION OF THE EMBODIMENTS

In the following, the constituent components and steps of the intelligent energy storage system and efficacies achieved are described with reference to preferred embodiments corresponding to various figures. However, the components, size, and appearance of the intelligent energy storage system in each figure are only used to describe the technical features of the disclosure and are not intended to limit the disclosure.

In addition, the terms such as "including", "comprising", "having", etc., used in the text are all open-ended terms, that is, "including but not limited to". In addition, the use of "and/or" in the text includes any one or more of the listed items in the enumeration and all combinations thereof.

The intelligent energy system of the disclosure provides a combined architecture of a first energy storage device 10 and a second energy storage device 20. The intelligent energy storage system in the first embodiment, the second embodiment, and the third embodiment provides a combined architecture of energy battery and power battery. The energy battery is a lithium battery structure, and the power battery is a capacitor structure. That is, the first energy storage device is a lithium battery structure, and the second energy storage device is a capacitor structure. This structure replaces the electrical connection structure of the traditional lead-acid battery and load/generator, thereby achieving the purpose of lead-free permanent battery. The lead-acid battery required by the external load and the generator is replaced by a capacitor structure. The occasional instantaneous voltage jump of the generator is absorbed by the capacitor structure to stabilize the DC power supply of the generator. Thus, both providing load power and generator voltage regulation are achieved through the operation of the capacitor structure. In response to the generator being in a power supply state, the lithium battery structure is only used for storing electrical energy. In response to the generator being in a power off state, the lithium battery structure provides the electrical energy lost by the capacitor structure due to self-consumption or power consumption by vehicle equipment. The composition of the intelligent energy storage system of the disclosure is described above. Subsequently, the operation and effect of the intelligent energy storage system of the disclosure are described in detail.

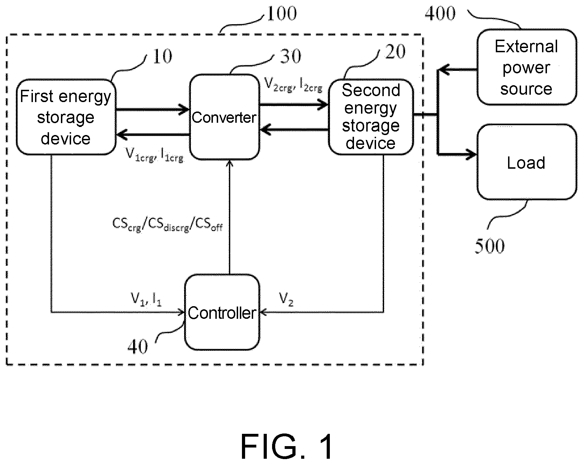

Referring to the first embodiment shown in FIG. 1, the disclosure provides an intelligent energy storage system 100, electrically connected to an external power source 400 and a load 500. The intelligent energy storage system 100 includes: a first energy storage device 10, for storing electrical energy; a second energy storage device 20, electrically connected to the external power source 400 and the load 500; a converter 30, electrically connected between the first energy storage device 10 and the second energy storage device 20; and a controller 40, configured to detect at least one electrical property of the first energy storage device 10 or the second energy storage device 20 to regulate the output voltage and the output current of the converter 30. In an energy storage mode, the external power source 400 is used as a power source to unidirectionally charge the first energy storage device 10 through the second energy storage device 20 and the converter 30. That is, the controller 40 controls the converter 30 to regulate an output voltage V_{1crg} and an output current I_{1crg}, allowing the external power source 400 to unidirectionally charge the first energy storage device 10 through the second energy storage device 20, avoiding an impact of a large current charge of the first energy storage device 10. In an energy transfer mode, the first energy storage device 10 is used as a power source to unidirectionally charge the second energy storage device 20 through the converter 30. That is, the controller 40 controls the converter 30 to regulate an output voltage V_{2crg} and an output current I_{2cg}, allowing the first energy storage device 10 to unidirectionally charge the second energy storage device 20, avoiding an impact of a large current discharge or overdischarge of the first energy storage device 10. Through the technical means described above, the first energy storage device 10 may be protected and the life time of the first energy storage device 10 may be extended.

In the first embodiment of the disclosure, a car is used as an example. The first energy storage device 10 is a lithium (iron) battery. The second energy storage device 20 is a super capacitor bank. The external power source 400 is a generator configured to provide the needed power for the load 500. The load 500 includes any one of a starting motor, a vehicle equipment, or a combination thereof, the super capacitor bank is directly electrically connected to the generator, the starting motor, and the vehicle equipment, the converter 30 is located between the lithium (iron) battery and the super capacitor bank and is electrically connected to the lithium (iron) battery and the super capacitor bank respectively to regulate the output voltage and the output current. In response to the car operating and conforming to an external power supply state, the generator is allowed to generate electrical power, which is then unidirectionally charged to the lithium (iron) battery through the super capacitor bank and the converter 30. In addition, in response to the car being turned off and conforming to an external power off state, the super capacitor bank provides the needed power for the load 500. In response to the electricity of the super capacitor bank being insufficient to provide the needed power for the load 500, the lithium (iron) battery is allowed to be discharged to unidirectionally charge the super capacitor bank through the converter 30. However, in the disclosure, the first energy storage device 10 is not limited to a lithium (iron) battery, the second energy storage device 20 is not limited to a super capacitor bank, the external power source is not limited to a generator, and the load is not limited to a starting motor and vehicle equipment.

The converter 30 in the first embodiment has a dual-way charging function, which respectively has a unidirectional charging function for the lithium (iron) battery and a unidirectional charging function for the super capacitor bank. The converter 30 includes an off state, a charge control state, and a discharge control state. The off state means that the converter 30 does not perform charging for the lithium (iron) battery or discharging for the lithium (iron) battery. The charge control state is to use the generator as the power source to unidirectionally charge the lithium (iron) battery through the super capacitor bank and the converter 30. The discharge control state is to use the lithium (iron) battery as the power source to unidirectionally charge the super capacitor bank through the converter 30.

To further explain how the first embodiment works, at the beginning, the converter 30 is in the off state, and the converter 30 does not perform charging or discharging. after detecting by the controller 40 that the second voltage value V₂ of the super capacitor bank conforms to an external power supply state, for example, the converter 30 is in the off state or the discharge control state, and at the same time the second voltage value V₂ of the second energy storage device 20 rises to conform to a default starting voltage value, or a variation of the second voltage value V₂ conforms to a default starting voltage difference, or the car provides a starting signal, the energy storage mode is entered. The controller 40 provides a control signal CS_{crg} of the converter 30 corresponding to the charge control state to regulate the output voltage V_{1crg} and the output current I_{1crg} generated by the converter 30. Thus, the converter 30 switches to the charge control state, using the generator as the power source, to unidirectionally charge the lithium (iron) battery through the super capacitor bank and the converter 30 until the first voltage value of the lithium (iron) battery reaches any voltage value higher than the default first lower limit voltage value V₁ₘᵢₙ set according to the requirements, which is set as the default first upper limit voltage value V₁ₘₐₓ and preferably set to the full potential or rated voltage. Alternatively, the controller 40 detects that a first current value I₁ of the lithium (iron) battery reaches a first lower limit current value I₁ₘᵢₙ. The first lower limit current value I₁ₘᵢₙ of this embodiment may be set to 0.2C. The controller 40 provides a control signal CS_{off} corresponding to the off state to the converter 30, so that the converter 30 switches to the off state and does not perform charging, thereby preventing the lithium (iron) battery from being overcharged.

After detecting by the controller 40 that the second voltage value V₂ of the super capacitor bank conforms to an external power off state, for example, the converter 30 is in the off state, and at the same time the second voltage value V₂ of the second energy storage device 20 drops to conform to a default turn off voltage value, or a variation of the second voltage value V₂ conforms to a default turn off voltage difference, or the car provides a turn off signal. In response to the second voltage value V₂ of the super capacitor bank being too low, this phenomenon is also called undervoltage, which means that the super capacitor bank is unable to normally provide a cold cranking ampere (CCA) for the starting motor. That is, the super capacitor bank is unable to supply enough current to actuate the starting motor. Thus, in response to the controller 40 detecting that the second voltage value V₂ of the super capacitor bank is lower than the second lower limit voltage value V₂ₘᵢₙ, and at the same time, the controller 40 detecting that the first voltage value V₁ of the lithium (iron) battery is greater than the first lower limit voltage value V₁ₘᵢₙ, the energy transfer mode is entered. The first lower limit voltage value V₁ₘᵢₙ is set to a value at which the lithium (iron) battery has reached the overdischarge voltage to prevent excessive discharge of the lithium (iron) battery. The controller 40 provides a control signal CS_{discrg} of the converter 30 corresponding to the discharge control state to regulate the output voltage V_{2crg} and the output current I_{2crg} generated by the converter 30. Thus, the converter 30 switches to the discharge control state, using the lithium (iron) battery as the power source, to unidirectionally charge the super capacitor bank until the controller 40 detects a second voltage value V₂ of the super capacitor bank reaching a default second upper limit voltage value V₂ₘₐₓ, which is preferably set to the full potential or rated voltage. Alternatively, the controller 40 detects that the first voltage value V₁ of the lithium (iron) battery is lower than the first lower limit voltage value V₁ₘᵢₙ. The controller 40 provides a control signal CS_{off} corresponding to the off state to the converter 30, so that the converter 30 switches to the off state and does not perform discharging the lithium (iron) battery. When necessary, warnings may be issued, including any one or a combination of audible alarms, visual displays, or illuminated indicators.

In the energy transfer mode in the first embodiment of the disclosure, the configuration for the second lower limit voltage value V₂ₘᵢₙ and the second upper limit voltage value V₂ₘₐₓ of the super capacitor bank in the energy storage mode is as follows. Taking a car as an example, the load current of a conventional starting motor of a car is related to the displacement CC of the car. The displacement refers to the total volume of the air and gas mixture inhaled by the internal combustion engine in a complete engine loop, which is usually expressed in cubic centimeter (CC). The size of the displacement is related to the power, acceleration performance, fuel consumption, and CO₂ emissions of the car. The minimum current value of cold cranking ampere (CCA) is determined by the specification of the starting battery. For example, a 12-volt starting battery may be defined as one that delivers for 30 seconds at 0°F while maintaining a voltage of at least 7.2 volts. In response to the current corresponding to the voltage value of 7.2 volts of the starting battery being lower than a lowest current value of the cold cranking ampere, the power for the instantaneous discharge of the starting battery is insufficient. That is, the starting battery is unable to supply enough current to the starting motor. Usually, the starting battery classified between 1600 CC and 2000 CC requires a starting battery with a cold cranking ampere (CCA) of 500A. In the intelligent energy storage system of the disclosure, the current for the starting motor is completely provided by the total CCA of the super capacitor bank. For example, a super capacitor bank is formed by 6 super capacitors connected in series, and the voltage of each of the super capacitors is 2.8 volts. The maximum voltage of the super capacitor bank is 2.8V × 6 = 16.8V. Thus, the super capacitor bank is boosted to draw 500A. In response to the sum of the internal resistance and the line resistance of the super capacitor bank being 0.013Ω, the second lower limit voltage value V₂ₘᵢₙ that the super capacitor bank may extract a current of 500A is 13.7V. The calculation is as follows: 7.2V/500A=0.0144Ω , V₂ₘᵢₙ /(0.013Ω+0.0144Ω) = 500A. Thus, it is preferable to design the second lower limit voltage value V₂ₘᵢₙ to be lower than the voltage value of the external power source connected in parallel with the super capacitor bank, so that the voltage value of the super capacitor bank is maintained higher than the second lower limit voltage value V₂ₘᵢₙ. For example, for a car generator whose external power source is a 12V system, the charging voltage of the generator is generally greater than or equal to 14.2V, and the second lower limit voltage value V₂ₘᵢₙ is set to 13.7V, so that the super capacitor bank may supply enough current to the starting motor at any time. In addition, the second upper limit voltage value V₂ₘₐₓ of the super capacitor bank may be set according to requirements to any voltage value higher than the second lower limit voltage value V₂ₘᵢₙ, which is preferably set to the full potential or rated voltage. For example, the second upper limit voltage value V₂ₘₐₓ of the super capacitor bank may be set to 15.8V.

The intelligent energy storage system in the first embodiment of the disclosure may use the super capacitor bank to achieve the characteristics of large current output and voltage regulation. Taking a car as an example, connecting the super capacitor bank directly to the generator, the starting motor, and the vehicle equipment in parallel may effectively actuate the starting motor and regulate the voltage of the generator, while improving the stability and life time of the vehicle equipment. Since the lithium (iron) battery does not directly participate in the overall start-up of the starting motor and the voltage regulation of the generator, a large current does not need to be supplied from the lithium (iron) battery at the moment of starting the starting motor (< 5ms). In response to the regulated AC power of the generator, an occasional instantaneous voltage jump that occurs during the operation of the car is absorbed by the super capacitor bank. That is, only the super capacitor bank assists in voltage regulation, ensuring that the lithium (iron) battery is not subjected to ripple and high charging currents, thereby extending the life time of the lithium (iron) battery.

For example, the electricity of the lithium (iron) battery is 30AHrs. In the energy storage mode, in response to actuating the generator, the generator is used as the power source. The lithium (iron) battery is unidirectionally charged through the super capacitor bank and the converter 30. The converter 30 charges the lithium (iron) battery with a controllable output current and a controllable output voltage with charging IC of 0.5C and a maximum of 15A, thereby effectively preventing the possibility of large current charging for the lithium (iron) battery. In the energy transfer mode, in response to a charging need of the super capacitor bank, the lithium (iron) battery is discharged to be used as a power source. The converter 30 unidirectionally charges the super capacitor bank with a controllable output current and a controllable output voltage with charging IC of 1C and a maximum of 30A, thereby effectively preventing the possibility of large current discharging for the lithium (iron) battery. Through the above mechanism, the needs of power storage, voltage regulation, and instantaneous high current are met without causing damage to lithium (iron) battery due to the large current. The converter 30 in this embodiment includes one or more boost/buck modules, but the disclosure is not limited thereto. The boost/buck modules are directional, and may receive a voltage source unidirectionally and convert it into one or more output voltage. The design of the boost/buck modules depends on the potential of the lithium (iron) battery and the super capacitor bank and operates in boosting mode or bucking mode. As the name implies, "boosting mode" means boosting a certain voltage to obtain another voltage, and "bucking mode" means bucking a certain voltage to obtain another voltage.

Regardless of whether it is in the energy storage mode or the energy transfer mode, in response to the converter 30 being in the charge control state or the discharge control state, the controller 40 regulates the converter 30 to unidirectionally charge the lithium (iron) battery or the super capacitor bank. A preferred charging mode is to execute a constant current charging mode (CC mode) and a constant voltage charging mode (CV mode) sequentially. At the beginning of charging (assuming that the lithium (iron) battery or the super capacitor bank is in a low electricity state, but not limited thereto), the charging mode of the lithium (iron) battery or the super capacitor bank is the constant current charging mode. At this time, the charging current is fixed and is a higher charging current. Thus, the electricity charged into the lithium (iron) battery or the super capacitor bank has a larger capacity and a higher charging speed, so that the lithium (iron) battery or the super capacitor bank may be fully charged quickly. In response to the lithium (iron) battery or the super capacitor bank is almost fully charged to an upper limit charging voltage value, the charging mode of the lithium (iron) battery or the super capacitor bank is changed to the constant voltage charging mode. At this time, the voltage is fixed and the charging current decreases, and the charging speed slows down, bringing the lithium (iron) battery or the super capacitor bank closer to a preferred condition of being fully charged.

Another example is that in response to a car with an idle stop system, the number of starts is N times that of a general vehicle. To reduce pollution and fuel consumption, some car manufacturers have introduced a start/stop system to their new-generation models that turns off the engine when the car stops. The engine is automatically restarted in response to the driver's foot moving from the brake pedal to the accelerator pedal. This explains how reducing fuel consumption during busy periods of urban driving and frequent stops and starts may simultaneously reduce air pollution. The intelligent energy storage system 100 of the disclosure may supply power to a car with an idle stop system (start/stop system). Compared to the number of start-up cycles of a conventional starting motor, the number of start-up cycles is N times, where N is a positive integer of the arithmetic mean or rounded digit. Thus, the engine is turned off when the car is stopped. That is, in response to the generator is not supplying power and conform to an external power off state, the super capacitor bank is used to supply power to the electronic power consumption of the vehicle equipment on the car, such as air conditioners, audio, headlights, etc., resulting in continuous electricity loss of the super capacitor bank. Thus, in response to the controller 40 detecting that the second voltage V₂ of the super capacitor bank is lower than the second lower limit voltage V₂ₘᵢₙ, the controller 40 controls the converter 30 to switch to the discharge control state and discharges the lithium (iron) battery, through the converter 30, to unidirectionally charge and supply power to the super capacitor bank until the second voltage value V₂ of the super capacitor bank reaches the second upper limit voltage V₂ₘₐₓ for the next engine start. In the case that the car is running, that is, the generator supplies power and conforms to an external power supply state, the controller 40 controls the converter 30 to switch to the charge control state. The power from the generator unidirectionally charges the lithium (iron) battery, through the super capacitor bank and the converter 30, until reaching the default first upper limit voltage value V₁ₘₐₓ, which is preferably set to the full potential or rated voltage. The second voltage value V₂ of the super capacitor bank is approximately equal to or slightly higher than the voltage of the generator.

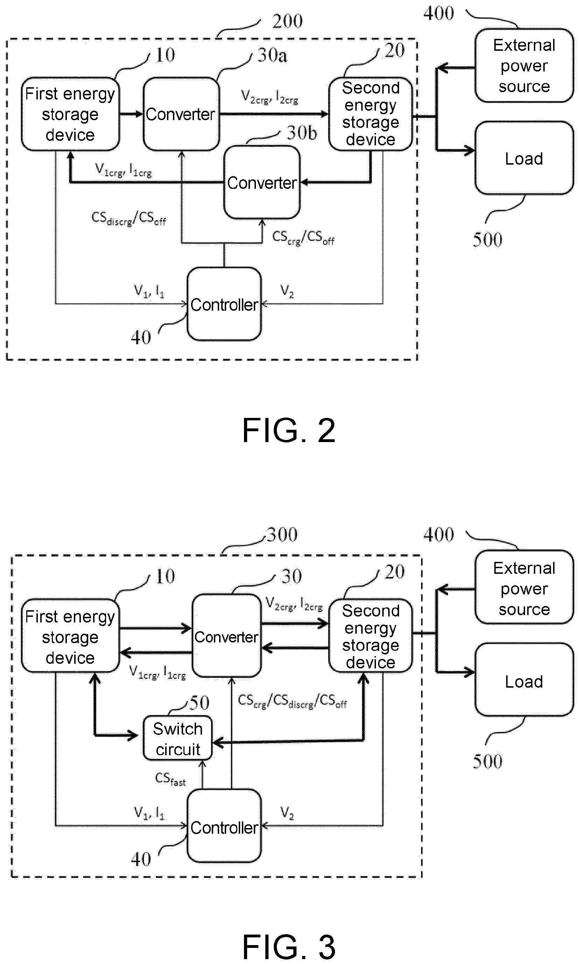

Referring to the second embodiment shown in FIG. 2, the intelligent energy storage system 200 of the disclosure is substantially the same as the intelligent energy storage system 100 in the first embodiment, and the only difference between the two are: the second embodiment has a converter 30a and a converter 30b in different directions. The converter 30a is electrically connected between the first energy storage device 10 and the second energy storage device 20. In response to conforming to an external power off state, for example, the controller 40 detects that the second voltage value V₂ of the super capacitor bank is too low, that is, the super capacitor bank is unable to provide the needed power for the load 500 properly. Thus, the energy transfer mode is entered. The controller 40 controls the converter 30a to switch to the discharge control state, and the lithium (iron) battery is used as a power source to unidirectionally charge the super capacitor bank through the converter 30a. However, another converter 30b is in the off state. Thus, the lithium (iron) battery does not directly participate in providing the needed power for the load 500 and regulating the generator. In response to conforming to an external power supply state, the energy storage mode is entered. The controller 40 controls the converter 30b to switch to the charge control state, and the generator is used as a power source to unidirectionally charge the lithium (iron) battery via the super capacitor bank through the converter 30b. However, another converter 30a is in the off state.

Referring to the third embodiment shown in FIG. 3, the intelligent energy storage system 300 of the disclosure is substantially the same as the intelligent energy storage system 100 in the first embodiment, and the only difference between the two are: A switch circuit 50, for switching the turn-on and turn-off states of the first energy storage device 10 and the second energy storage device 20, is added. In response to the generator stopping supplying electricity and conforming to an external power off state, the second energy storage device 20 provides the needed power for the load 500. In response to the controller 40 detecting that the second voltage value V₂ of the second energy storage device 20 continues to drop too fast, that is, the load 500 still has a large electricity consumption, the controller 40 provides the control signal CS_{off} corresponding to the off state to the converter 30. The converter 30 is switch to the off state and does not perform charging or discharging. At the same time, the controller 40 provides a corresponding control signal CS_{fast}, so that the switch circuit 50 turns on the first energy storage device 10 and the second energy storage device 20. Compared with the charging current 30A of the converter 30 in the first embodiment, the third embodiment may provide a higher charging current, for example, 70A, to quickly charge the second energy storage device 20 by the first energy storage device 10 and meet the large electricity demand of the load 500. The switch circuit 50 is, for example, a switch composed of at least one of a metal-oxide-semiconductor field-effect transistor (MOSFET), an insulated gate bipolar transistor (IGBT), a relay, and an electromagnetic switch, but the disclosure is not limited thereto.

In the intelligent energy storage system in another embodiment of the disclosure (not shown in the figure), the controller 40 detects that the second voltage value V₂ of the second energy storage device 20 conforms to an external power off state. In this case, the load 500 may be powered by the first energy storage device 10 as the source of electricity supply, or by the second energy storage device 20 as the source of electricity supply, or by both the first energy storage device 10 and the second energy storage device 20 as the source of electricity supply.

The application of the intelligent energy storage system of the disclosure is not limited to automobiles or fishing vessels. The smart energy storage system itself serves as an independent battery that provides protection and extends the life time of the intelligent energy storage system. This allows vehicles and internal combustion engines to operate throughout their lifetime with one intelligent energy storage system. The system fulfills the requirements of energy storage, voltage regulation, and large current demand. The voltage regulation enhances the efficiency and stability of vehicles, internal combustion engines, fuel, or electronic controls, thereby reducing air pollution. The disclosure may be applied to any vehicle powered by an internal combustion engine or any power equipment requiring a battery, without the need for modifications to the design, making it suitable for both original equipment manufacturers and aftermarket demands.

It should be emphasized that the components disclosed in the abovementioned embodiments of the disclosure are provided as illustrative examples and should not be construed as limiting the scope of the disclosure. Substitutes or variations of other equivalent components should also be considered within the scope of the technical solution of the disclosure.

Finally, it should be noted that the foregoing embodiments are only used to illustrate the technical solutions of the disclosure, but not to limit the disclosure; although the disclosure has been described in detail with reference to the foregoing embodiments, persons of ordinary skill in the art should understand that the technical solutions described in the foregoing embodiments can still be modified, or parts or all of the technical features thereof can be equivalently replaced; however, these modifications or substitutions do not deviate the essence of the corresponding technical solutions from the scope of the technical solutions of the embodiments of the disclosure.

## Claims

1. An intelligent energy storage system, electrically connected to an external power source and a load, wherein the intelligent energy storage system comprises:
a lithium battery structure, for storing electrical energy;
a capacitor structure, electrically connected to the external power source and the load, wherein in an energy storage mode, the external power source is used as a power source to charge the lithium battery structure through the capacitor structure, in response to a second voltage value of the capacitor structure being lower than a second lower limit voltage value and a first voltage value of the lithium battery structure being greater than a first lower limit voltage value, an energy transfer mode is entered and the lithium battery structure is used as the power source for charging the capacitor structure;
at least one converter, electrically connected between the lithium battery structure and the capacitor structure for regulating an output voltage and an output current, allowing the lithium battery structure to unidirectionally charge the capacitor structure, or allowing the external power source to unidirectionally charge the lithium battery structure through the capacitor structure and the converter; and
a controller, configured to detect the first voltage value of the lithium battery structure or the second voltage value of the capacitor structure to regulate the output voltage and the output current of the converter to avoid a large current charge or discharge of the lithium battery structure to protect the lithium battery structure.

2. The intelligent energy storage system according to claim 1, wherein the converter comprises an off state, a charge control state, and a discharge control state, the off state means that the converter does not perform charging or discharging, the charge control state is for the external power source to unidirectionally charge the lithium battery structure through the capacitor structure and the converter, and the discharge control state is for the lithium battery structure to unidirectionally charge the capacitor structure through the converter.

3. The intelligent energy storage system according to claim 2, wherein the controller controls the converter to switch between the off state, the charge control state, and the discharge control state by detecting the first voltage value or a first current value of the lithium battery structure, or the second voltage value of the capacitor structure.

4. The intelligent energy storage system according to claim 1, wherein the energy storage mode is entered after detecting by the controller that the second voltage value of the capacitor structure conforms to an external power supply state.

5. The intelligent energy storage system according to claim 3, wherein in the energy storage mode, the converter is in the charge control state until the first voltage value of the lithium battery structure reaches a first upper limit voltage value, or until the first current value of the lithium battery structure reaches a first lower limit current value, and the controller controls the converter to switch to the off state without charging.

6. The intelligent energy storage system according to claim 2, wherein after the controller detects that the second voltage value of the capacitor structure conforms to an external power off state, the load uses at least one of the lithium battery structure and the capacitor structure as a source of electricity supply.

7. The intelligent energy storage system according to claim 2, wherein in response to entering the energy transfer mode, the converter is in the discharge control state until the second voltage value of the capacitor structure reaches a second upper limit voltage value.

8. The intelligent energy storage system according to claim 2, wherein in the energy storage mode or the energy transfer mode, in response to the converter in the charge control state or the discharge control state, the converter is regulated by the controller to charge the lithium battery structure or the capacitor structure, and a constant current charging mode and a constant voltage charging mode are sequentially executed.

9. The intelligent energy storage system according to claim 8, wherein a condition for the constant current charging mode to be changed to the constant voltage charging mode is to satisfy a default upper limit charging voltage value.

10. The intelligent energy storage system according to claim 2, further comprising a switch circuit, wherein the controller controls the converter to switch to the off state, so that the switch circuit turns on the lithium battery structure and the capacitor structure, to achieve fast charging the capacitor structure by the lithium battery structure.

11. The intelligent energy storage system according to claim 1, wherein the load comprises a starting motor that entering the energy transfer mode, which satisfies equations: R_{M} = 7.2 V / CCA, and V₂ₘᵢₙ = CCA × (R_{C}+R_{L}+R_{M}), wherein V₂ₘᵢₙ is the second lower limit voltage value of the capacitor structure, CCA is a cold cranking ampere of actuating the starting motor by the capacitor structure, Rc is an internal resistance of the capacitor structure, R_{L} is a line resistance of the capacitor structure, and R_{M} is a resistance of the starting motor.
